# EUROPEAN PATENT APPLICATION

(11) **EP 1 855 185 A2**
(43) Date of publication of application: **14.11.2007**
(21) Application number: 07002536.6
(22) Date of filing: 06.02.2007
(51) Int. Cl.: G06F 3/048

(54) **Method of displaying text using mobile terminal**

(30) Priority: 03.05.2006 KR 20060040011
(71) Applicant: LG Electronics Inc., Yongdungpo-Gu Seoul 150-010 (KR)
(72) Inventor: Kim, Tae Hun, Incheon-si (KR); Woo, Boem Young, Bucheon-si Gyeonggi-do (KR); Yoon, Jeong Hyuk LG Electronics Inc. IP Group, Kumchon-gu, Seoul, 153-801 (KR); Ahn, Hyun Ju, Seoul (KR); Han, Seung Sook, Suwon-si Gyeonggi-do (KR); Park, Jun Serk, Seoul (KR); Cheon, Ho Sang, Seoul (KR)
(74) Representative: Katérle, Axel

(57) **Abstract**

A mobile terminal and method of displaying text using a mobile terminal are disclosed by which a user is able to check, input, amend and edit a selected word by enlarging the word selected for display. The present invention displays text including at least one word on a screen of the mobile terminal, selects one of the words, and magnifies the selected word according to a prescribed magnification.

## Description

This application claims the benefit of the Korean Patent Application No. 10-2006-0040011, filed on May 3, 2006, which is hereby incorporated by reference as if fully set forth herein.

### FIELD OF THE INVENTION

The present invention is directed to a mobile terminal, and more specifically to a mobile terminal and method of displaying a text using a mobile terminal. Although the present invention is suitable for a wide scope of applications, it is particularly suitable for allowing a user to check, input and edit words included in text without reducing a quantity of information displayed on a screen.

### DESCRIPTION OF THE RELATED ART

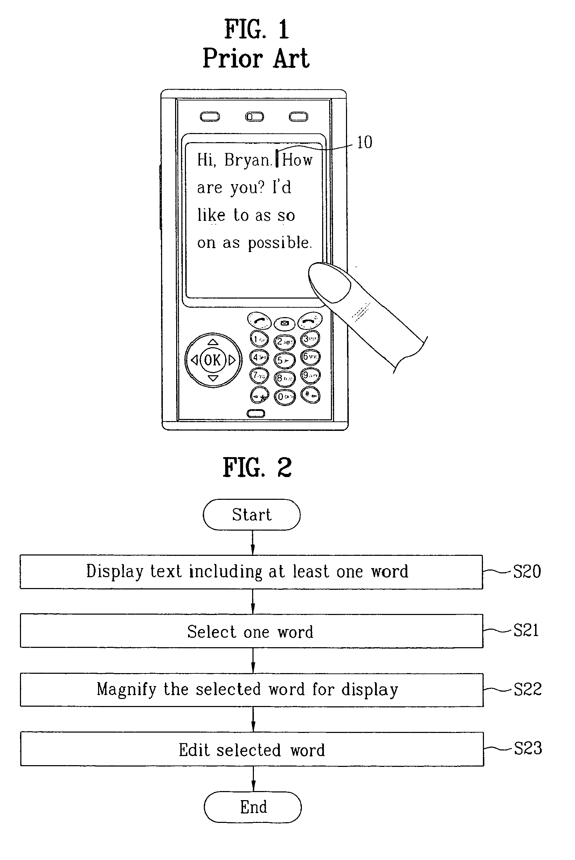

FIG. 1 illustrates a diagram of a screen displaying text in a related art mobile terminal. A method of displaying a text in a mobile terminal according to a related art is explained with reference to FIG. 1.

As illustrated in FIG. 1, a user must move a cursor 10 one space at a time to a position of a character or word to be amended, inputted or edited in order to edit text displayed on a screen of a mobile terminal. The inconvenience of moving the cursor 10 one space at-a-time may be addressed by a mobile terminal having a touch screen, whereby a user directly touches the touch screen to move the cursor 10 to a specific position..

However, it is inconvenient for a user to touch a specific position accurately using a finger since a related art mobile terminal is normally provided with a small touch screen. Specifically, a user moves the cursor by touching a position in the vicinity of the specific position using his or her finger and then moves the cursor to the specific position by fine adjustment using for example, a directional key. The inconvenience increases and can causes fatigue to user's eyes when checking each word if a character size is reduced in order to display more information on the screen.

### SUMMARY OF THE INVENTION

The present invention is directed to a mobile terminal and method of displaying text using a mobile terminal that substantially obviates one or more problems due to limitations and disadvantages of the related art. An object of the present invention is to provide a mobile terminal and method of displaying text using a mobile terminal by which a user may check, input, amend and edit a user-selected word by enlarging the display size of the word selected by a user. Another object of the present invention is to provide a mobile terminal and method of displaying text using a mobile terminal by which magnifying a selected word in order to edit the word within a window that displays the magnified word can increase an area recognizing rate of a touch screen.

In one aspect of the present invention, a method for editing displayed text in a mobile communication terminal is provided. The method includes displaying at least one word on a screen, selecting one of the at least one word and automatically enlarging the selected word on the screen according to a predetermined magnification factor.

It is contemplated that selecting the one of the at least one word includes positioning a cursor at a position on the screen adjacent any character of the one word and automatically selecting the entire one word. It is further contemplated that selecting the one of the at least one word further includes using a directional key on a keypad to move the cursor to one of a next previous and a next successive of the at least one word such that the cursor does not move between characters of the selected entire word.

It is contemplated that selecting the one of the at least one word includes detecting contact with the screen where any character of the one word is displayed and automatically selecting the entire one word. It is further contemplated that enlarging the selected word includes generating a window of predetermined size and shape on the screen and enlarging and displaying the selected one word in the window.

It is contemplated that generating the window includes displaying a cursor in the window, the cursor positioned adjacent a character of the enlarged selected word and movable between characters of the enlarged selected word. It is further contemplated that the method further includes displaying a cursor, the cursor positioned adjacent a character of the enlarged selected word and movable between characters of the enlarged selected word.

It is contemplated that the method further includes editing the enlarged selected word. It is further contemplated that the method further includes selecting another of the at least one word, automatically enlarging the selected another word according to the predetermined magnification factor and automatically displaying the previously selected one word in its original size.

In another aspect of the present invention, a mobile terminal adapted to display text is provided. The mobile terminal includes a display unit adapted to display at least one word on a screen, an input unit adapted to select one of the at least one word and a control unit adapted to automatically enlarge the selected word according to a predetermined magnification factor.

It is contemplated that the input unit includes a key pad including at least one directional key adapted to position a cursor on the screen and the input unit is further adapted to automatically select the entire one word when the cursor is positioned on the screen adjacent any character of the one word. It is further contemplated that the at least one directional key is further adapted to move the cursor to one of a next previous and a next successive of the at least one word such that the cursor does not move between characters of the selected entire word.

It is contemplated that the input unit includes a touch-screen and is further adapted to detect contact with the touch-screen where any character of the one word is displayed and automatically select the entire one word. It is further contemplated that the control unit is further adapted to generate a window of predetermined size and shape on the screen and enlarge and display the selected one word in the window.

It is contemplated that the control unit is further adapted to display a cursor in the window, the cursor positioned adjacent a character of the enlarged selected word and movable between characters of the enlarged selected word. It is further contemplated that the control unit is further adapted to display a cursor, the cursor positioned adjacent a character of the enlarged selected word and movable between characters of the enlarged selected word. Preferably, the control unit is further adapted to edit the enlarged selected word. It is further contemplated that the input unit is further adapted to select another of the at least one word and the control unit is further adapted to automatically enlarge the selected another word according to the predetermined magnification factor and automatically display the previously selected one word in its original size.

In another aspect of the present invention, a method for editing displayed text in a mobile communication terminal is provided. The method includes displaying a plurality of words on a screen, the plurality of words displayed in a first size, either positioning a cursor at a position on the screen adjacent any character of one of the plurality of words or detecting contact with the screen where any character of one of the plurality of words is displayed, automatically selecting the entire one of the plurality of words and enlarging the selected one of the plurality of words such that it is displayed in a second size larger than the first size.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a diagram of a screen displaying a text in a conventional mobile terminal.

FIG. 2 illustrates a flowchart of a method for displaying text according to one embodiment of the present invention.

FIGS. 3 (a)-(c) illustrate a screen for displaying text according to one embodiment of the present invention.

FIGS. 4 (a)-(c) illustrate a screen for editing a word according to one embodiment of the present invention.

FIGS. 5 (a)-(c) illustrate a screen for inter-word movement according to one embodiment of the present invention.

FIG. 6 illustrates a block diagram of a mobile terminal adapted to implement a text displaying method according to one embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers are used throughout the drawings to refer to the same or like parts.

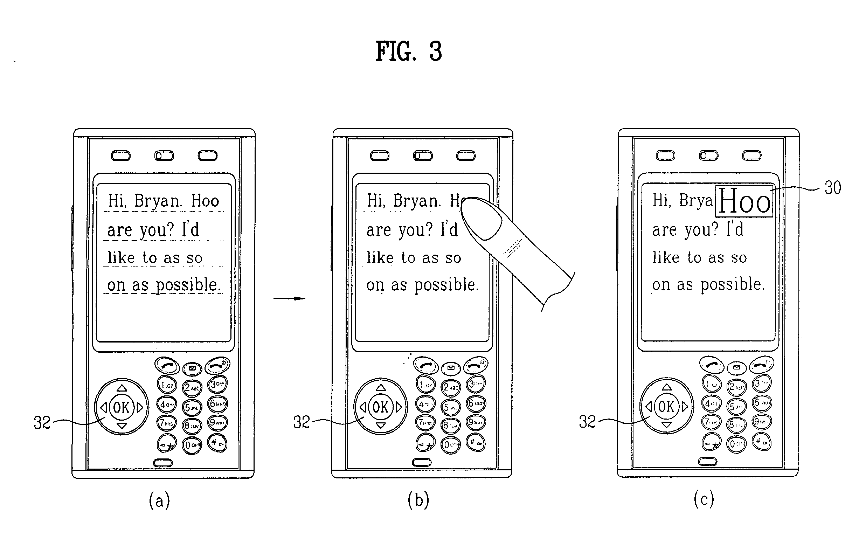

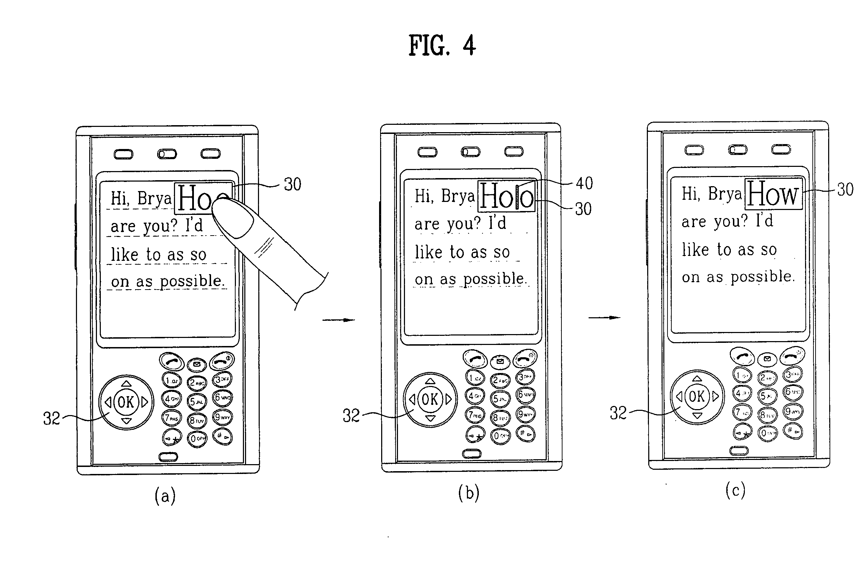

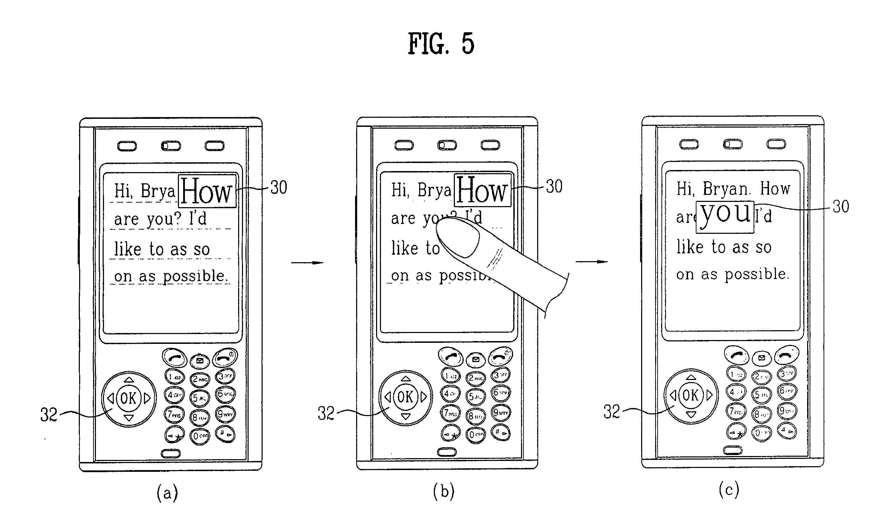

FIG. 2 illustrates a flowchart of a method for displaying text according to one embodiment of the present invention. FIGS. 3 (a)-(c) illustrate a screen for displaying text according one embodiment of to the present invention. FIGS. 4 (a)-(c) illustrate a screen for editing a word according to one embodiment of the present invention. FIGS. 5 (a)-(c) illustrate a diagram of a screen for inter-word movement according to one embodiment of the present invention. A method of displaying text according to one embodiment of the present invention is explained in detail with reference to FIGS. 2 to 5.

A method of displaying a text according to one embodiment of the present invention can be implemented in a mobile terminal having a touch screen. A mobile terminal for implementing a text displaying method according to the present invention will be explained later.

As illustrated in FIG. 3(a), text including at least one word is displayed on a screen of a terminal (S20). For example, a user of the terminal inputs text to send a message using a SMS (short message service).

One of the displayed words is then selected (S21). The word selection may be performed in two ways.

According to one way of selecting a word, a word located where a cursor displayed on the screen is positioned is selected in a Key input mode. For example, the word located at the position to which a cursor has been moved is selected when the cursor is moved according to a directional key 32 illustrated in (a) FIG. 3.

According to another way of selecting a word, a word touched by using a touch screen provided in the terminal is selected in a Touch mode. For example, the word 'Hoo' is selected by touch mode, as illustrated in FIG. 3(b).

As illustrated in FIG. 3(c), a size of the selected word is magnified by a prescribed magnification such that the enlarged word is displayed (S22). As illustrated in FIG. 3(c), a prescribed window 30 for displaying the magnified word is generated on the screen. For example, the window 30 is generated on the screen, as illustrated in FIG. 3(c), for magnifying the word 'Hoo', which was selected in step S21.

The widow 30, which has a prescribed transparency, enables a user to recognize text contained in the window. The user can set the size of the prescribed window, the prescribed magnification and the transparency.

The user edits the word magnified according to the prescribed magnification in the generated window 30 (S23). Word editing refers to changing characters contained in the magnified word by amendment, addition or deletion.

FIGS. 4 (a)-(c) illustrate a detailed example of the word editing performed in step S23. As illustrated in FIGS. 4 (a) and (b), a cursor 40 is generated when entering an editing mode if the window 30 is touched.

A user is then able to edit a word displayed on the window 30 in the editing mode. As illustrated in FIGS. 4 (a) - (c), 'Hoo' is amended into 'How'.

Selection of a different word for editing according to the present invention is explained with reference to FIGS. 5 (a)-(c). A word different from the word selected in step S21, as illustrated in FIGS. 4 (a) - (c), is selected. For example, after *'*Hoo*'* has been amended into 'How' by the user in FIG. 5 (a), the user selects 'you', as illustrated in FIGS. (b) and (c).

The size of the word selected in step S21 is returned to the size of the word displayed in step S20 and a size of the newly selected word is magnified by a prescribed magnification for display. For example, 'you' selected in FIG. 5 (b) is magnified by a prescribed magnification and then displayed, as illustrated in FIG. 5 (c).

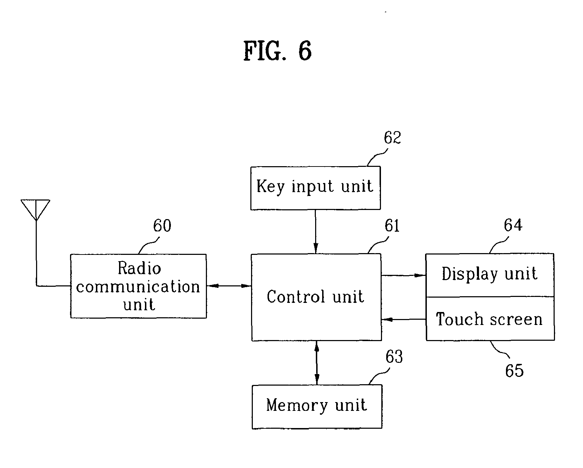

FIG. 6 is a block diagram of a mobile terminal for implementing a text displaying method according to one embodiment of the present invention. As illustrated in FIG. 6, the mobile terminal includes a radio communication unit 60, a control unit 61, a key input unit 62, a memory unit 63, a display unit 64 and a touch screen 65.

The radio communication unit 60 is a communication device for transmitting/receiving data to/from a mobile communication network. The control unit 61 controls overall operation of the mobile terminal according to the present invention.

The key input unit 62 includes various numeral keys and directional keys. The key input unit 62 is an input device for receiving various information or commands from a user.

The memory unit 63 stores a program for controlling the overall operation of the mobile terminal. The memory unit 63 stores various data processed when the control unit 61 executes the overall operation of the mobile terminal.

The display unit 64 is a device for displaying a status of the mobile terminal or various types of information. The touch screen 65 is provided as part of the display unit 64 and provides a user interface separate from the key input unit 62. The touch screen 65 performs a function of an input device in order to deliver coordinates of an externally touched point to the control unit 61.

The mobile terminal is explained with reference to the operation of the control unit 61. For convenience of explanation, it is assumed that text including at least one word is displayed on the display unit 64, as illustrated in FIG. 3 (a) .

The key input unit 62 or the touch screen 65 delivers a selection signal for one of the words displayed on the display unit 64 to the control unit 61. If the word is selected using the key input unit 62, the selection signal selects a word at a position where a cursor is placed using a directional key of the key input unit. If the word is selected using the touch screen 65, the selection signal selects the word touched using the touch screen and the touch screen 65 delivers coordinates of the touched word to the control unit 61, the delivered coordinates enabling the control unit to determine what type of word is selected.

The control unit 61 controls a size of the selected word, which is magnified and displayed according to a prescribed magnification, based on the selection signal from the key input unit 62 or the touch screen 65. The control unit 61 generates a window 30 for displaying the word, which is magnified by according to the prescribed magnification, on the display unit 64, as illustrated in FIG. 3 (c).

The user is able to recognize the text contained in the generated window 30 because the control unit 61 generates the window having a prescribed transparency. A user can set the prescribed magnification and transparency in addition to the size of the prescribed window. The word magnified according to the prescribed magnification, as illustrated in FIGS 3(c) and 4(a) and (b), can be edited in the window.

Accordingly, the present invention provides several effects or advantages.

By magnifying and displaying a word selected by a user, the user is able to check, input, amend and edit the selected word. Specifically, the user is able to edit the selected word within a window in which the selected word is magnified. Therefore, the user has little difficulty locating an accurate position of the word to be edited and eye fatigue is reduced.

An area recognizing rate of a touch screen can be increased by enabling word editing within a window in which a selected word is magnified for display. In other words, a touch area of the present invention for recognizing a word or character is enhanced over that of the related art.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for editing displayed text in a mobile communication terminal, the method comprising:
displaying at least one word on a screen;
selecting one of the at least one word; and
automatically enlarging the selected word on the screen according to a predetermined magnification factor.

2. The method of claim 1, wherein selecting the one of the at least one word comprises
positioning a cursor at a position on the screen adjacent any character of the one word; and
automatically selecting the entire one word.

3. The method of claim 2, wherein selecting the one of the at least one word further comprises using a directional key on a keypad to move the cursor to one of a next previous and a next successive of the at least one word such that the cursor does not move between characters of the selected entire word.

4. The method of claim 1, wherein selecting the one of the at least one word comprises:
detecting contact with the screen where any character of the one word is displayed; and
automatically selecting the entire one word.

5. The method of claim 1, wherein enlarging the selected word comprises:
generating a window of predetermined size and shape on the screen; and
enlarging and displaying the selected one word in the window.

6. The method of claim 5, wherein generating the window comprises displaying a cursor in the window, the cursor positioned adjacent a character of the enlarged selected word and movable between characters of the enlarged selected word.

7. The method of claim 1, further comprising displaying a cursor, the cursor positioned adjacent a character of the enlarged selected word and movable between characters of the enlarged selected word.

8. The method of claim 1, further comprising editing the enlarged selected word.

9. The method of claim 1, further comprising:
selecting another of the at least one word;
automatically enlarging the selected another word according to the predetermined magnification factor; and
automatically displaying the previously selected one word in its original size.

10. A mobile terminal adapted to display text, the mobile terminal comprising:
a display unit adapted to display at least one word on a screen;
an input unit adapted to select one of the at least one word; and
a control unit adapted to automatically enlarge the selected word according to a predetermined magnification factor.

11. The mobile terminal of claim 10, wherein the input unit comprises a key pad including at least one directional key adapted to position a cursor on the screen and the input unit is further adapted to automatically select the entire one word when the cursor is positioned on the screen adjacent any character of the one word.

12. The mobile terminal of claim 11, wherein the at least one directional key is further adapted to move the cursor to one of a next previous and a next successive of the at least one word such that the cursor does not move between characters of the selected entire word.

13. The mobile terminal of claim 10, wherein the input unit comprises a touch-screen and is further adapted to:
detect contact with the touch-screen where any character of the one word is displayed; and
automatically select the entire one word.

14. The mobile terminal of claim 10, wherein the control unit is further adapted to:
generate a window of predetermined size and shape on the screen; and
enlarge and display the selected one word in the window.

15. The mobile terminal of claim 14, wherein the control unit is further adapted to display a cursor in the window, the cursor positioned adjacent a character of the enlarged selected word and movable between characters of the enlarged selected word.

16. The mobile terminal of claim 10, wherein the control unit is further adapted to display a cursor, the cursor positioned adjacent a character of the enlarged selected word and movable between characters of the enlarged selected word.

17. The mobile terminal of claim 10, wherein the control unit is further adapted to edit the enlarged selected word.

18. The mobile terminal of claim 10, wherein:
the input unit is further adapted to select another of the at least one word; and
the control unit is further adapted to automatically enlarge the selected another word according to the predetermined magnification factor and automatically display the previously selected one word in its original size.

19. A method for editing displayed text in a mobile communication terminal, the method comprising:
displaying a plurality of words on a screen, the plurality of words displayed in a first size;
either positioning a cursor at a position on the screen adjacent any character of one of the plurality of words or detecting contact with the screen where any character of one of the plurality of words is displayed;
automatically selecting the entire one of the plurality of words; and
enlarging the selected one of the plurality of words such that it is displayed in a second size larger than the first size.
